# EUROPEAN PATENT APPLICATION

(11) **EP 4 750 070 A1**
(43) Date of publication of application: **27.05.2026**
(21) Application number: 25216539.4
(22) Date of filing: 18.11.2025
(51) Int. Cl.: H04N 23/60, H04N 7/18, H04N 23/661, H04N 23/90, G06F 16/00, G06Q 10/00

(54) **INFORMATION PROCESSING APPARATUS AND CONTROL METHOD THEREOF, SYSTEM, PROGRAM, AND STORAGE MEDIUM**

(30) Priority: 21.11.2024 JP 2024203412
(71) Applicant: Canon Kabushiki Kaisha, Tokyo, 146-8501 (JP)
(72) Inventor: SHIMIZU, Makoto, Tokyo, 146-8501 (JP)
(74) Representative: TBK

(57) **Abstract**

An information processing apparatus linked to a first image capturing apparatus comprises: receiving means configured to receive image capturing plan information including at least one image capturing plan that uses the first image capturing apparatus from a management apparatus that manages information on a plurality of image capturing apparatuses; determination means configured to determine whether the image capturing plan information includes a history indicating that another information processing apparatus associated with another image capturing apparatus selects one of the image capturing plan or plans included in the image capturing plan information; and output means configured to, in a case where the history is included, select and output an image capturing plan indicated by the history.

## Description

### TECHNICAL FIELD

The present disclosure relates to an information processing apparatus and a control method thereof, a system, a program, and a storage medium, and in particular to a technology for supporting linking of captured data with a news-gathering activity plan.

### BACKGROUND

Conventionally, a news-gathering activity support system for enabling the news-gathering activities to be conducted efficiently is provided, with which a planner makes a plan and prepares in advance equipment for the news-gathering activities such as a camera, a reporter, the location of news-gathering activities, date and time, contents, etc., and the planner and the reporter share the plan. Such a news-gathering activity support system allows seamless collaboration between planners and reporters. For example, when requesting news-gathering activities using the news-gathering activity support system, the planner first creates a news-gathering activity plan on the news-gathering activity support system, including a camera, a photographer, a location of news-gathering activities, date and time, contents of the news-gathering activities, etc., then informs the reporter of the news-gathering activity plan.

Furthermore, the news-gathering activity support system is required to link image data captured during news-gathering activities with a news-gathering activity plan in order to facilitate the management and editing of the captured data. For example, in the method described in Japanese Patent No. 7020429, GPS information from cameras and a news-gathering activity support apparatus is acquired, and the user of the news-gathering activity support apparatus transmits information about the assigned news-gathering activity plan to a camera close to a location of the assigned news-gathering activity plan. Then, by automatically linking the image data captured by that camera with the news-gathering activity plan, an editor can compare and refer to information about the news-gathering activity plan linked to the acquired image data with the news-gathering activity plan to be performed, thereby improving editing convenience.

### SUMMARY

However, the method described in Japanese Patent No. 7020429 automatically determines and assigns an image capturing plan to a camera based on location information, so it cannot accommodate cases where the user wants to select a news-gathering activity plan of his/her own choosing. For example, the order of the news-gathering activity plan may need to be changed on-site due to on-site circumstances, or news-gathering activities that were not scheduled to be performed that day may need to be performed at short notice. It also cannot accommodate operations where a plurality of image capturing plans are conducted at the same location.

On the other hand, requiring the camera user to set a news-gathering activity plan each time they want to perform increases the workload on-site.

The present disclosure has been made in consideration of the above situation, and on-site news-gathering activity plans will be flexibly allocated while reducing the workload.

The present disclosure in its first aspect provides an information processing apparatus as specified in claim 1. Optional features are specified in claim 2 to 8.

The present disclosure in its second aspect provides a system as specified in claim 9. Optional features are specified in claim 10 to 12.

The present disclosure in its third aspect provides a control method as specified in claim 13.

The present disclosure in its fourth aspect provides a program as specified in claim 14.

The present disclosure in its third aspect provides a computer-readable storage medium as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram illustrating an example of a configuration of a news-gathering activity support system according to an embodiment of the present disclosure.
FIG. 2 is a block diagram illustrating a functional configuration of an information processing apparatus used as a system, server, and terminal according to the embodiment.
FIG. 3 is a diagram illustrating examples of news-gathering activity plans (stories) according to a first embodiment.
FIG. 4 is a sequence diagram illustrating a flow of processing performed in the news-gathering activity support system according to the first embodiment.
FIG. 5 is a diagram illustrating an example of a story selection screen according to the first embodiment.
FIG. 6 is a flowchart illustrating story extraction processing performed by a camera management system according to the first embodiment.
FIG. 7 is a flowchart illustrating story selection processing according to the first embodiment.
FIG. 8 is a flowchart illustrating story selection processing according to a second embodiment.
FIG. 9 is a diagram illustrating an example of a story selection screen according to the second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

### - Configuration of News-Gathering Activity Support System

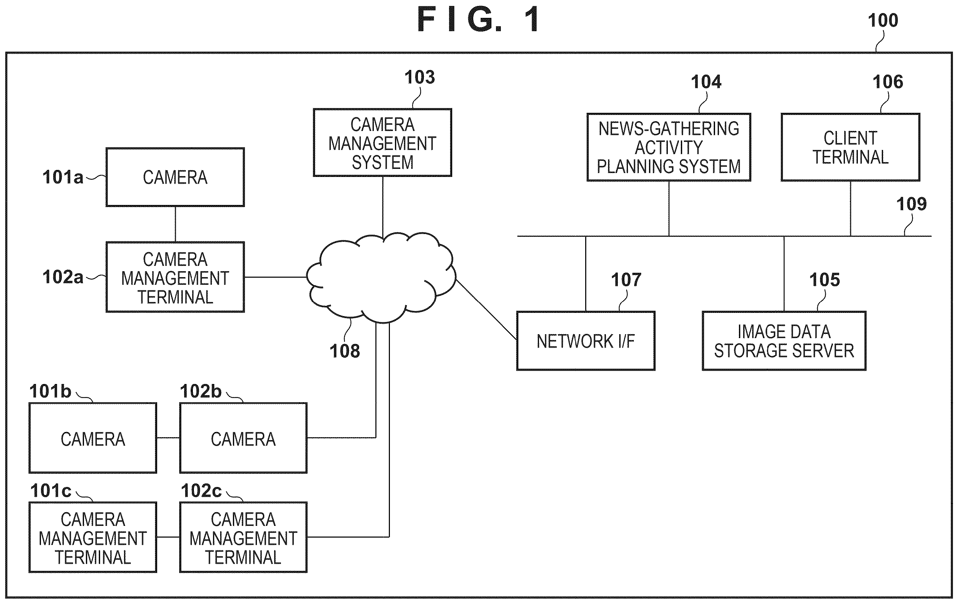

FIG. 1 illustrates an example of a configuration of a news-gathering activity support system 100 according to an embodiment of the present disclosure. The news-gathering activity support system 100 includes a plurality of cameras 101a to 101c (image capturing apparatuses) for capturing images during news gathering activities. Note that the cameras 101a to 101c may be, for example, digital still cameras, digital video cameras, or other cameras, or any electronic devices with image capturing capabilities. Examples of such electronic devices include, but are not limited to, information processing apparatuses such as tablet devices and personal computers with camera, mobile phones, robots, drones, and so forth.

The news-gathering activity support system 100 also includes camera management terminals 102a to 102c and a camera management system 103 to support linking captured image data to a news-gathering activity plan. Furthermore, the news-gathering activity support system 100 also includes a news-gathering activity planning system 104, an image data storage server 105, and a client terminal 106 to manage news-gathering activity plans (image capturing plans) and news-gathering activity results including image data, and is connected to a network 108 such as the Internet via a network I/F 107. The news-gathering activity planning system 104, the image data storage server 105, the client terminal 106, and the network I/F 107 are also connected to one another via a local area network 109. The image data includes, for example, video data. The camera management terminals 102a to 102c and the client terminal 106 can be, for example, information processing terminals such as tablet devices and personal computers.

FIG. 1 shows three cameras 101a to 101c and three corresponding camera management terminals 102a to 102c, but the present disclosure is not limited to the numbers of camera/cameras and camera management terminal/terminals, and the numbers of camera/cameras and corresponding camera management terminal/terminals may be one, or four or more. In the following explanation, if the camera is not individually specified, it will be referred to as the camera 101 and the camera management terminal will be referred to as the camera management terminal 102, and if the camera is individually specified, it will be described as the camera 101a, 101b or 101c and the camera management terminal will be referred to as the camera management terminal 102a, 102b or 102c.

Further, in FIG. 1, the cameras 101a to 101c correspond to the camera management terminals 102a to 102c, respectively, but it is also possible to link a plurality of cameras to one camera management terminal.

Although not shown, the news-gathering activity support system 100 includes a plurality of components similar to the configuration consisting of a news-gathering activity planning system 104, an image data storage server 105, a client terminal 106, a network I/F 107, and a LAN 109.

In the news-gathering activity planning system 104, information on the cameras 101 managed by the camera management system 103 can be viewed, and the planner can view the information on the cameras 101 and select the camera 101 to use for news-gathering activities.

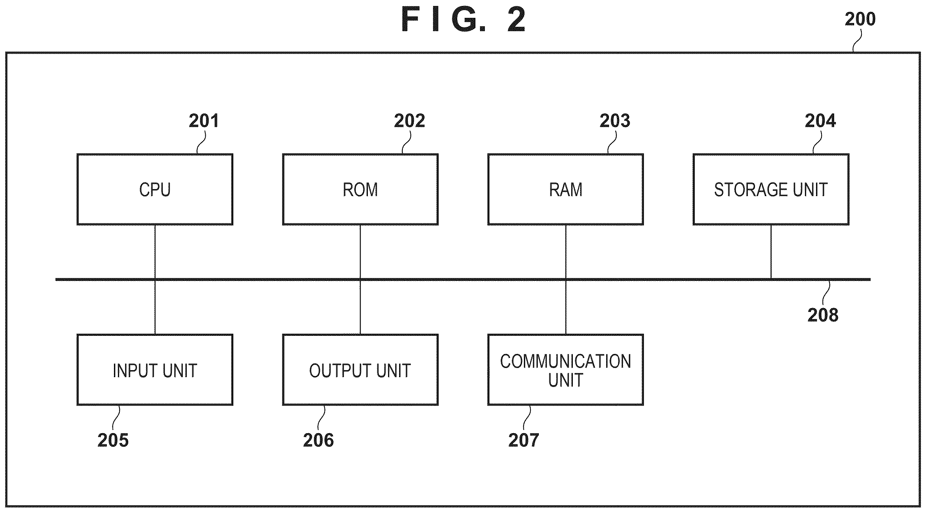

FIG. 2 is a block diagram illustrating a general functional configuration of an apparatus used as the camera management terminal 102, the camera management system 103, the news-gathering activity planning system 104, the image data storage server 105, and the client terminal 106. Actual apparatuses having the configuration shown in FIG. 2 can take various forms, but in this explanation they will be collectively referred to as an information processing apparatus 200.

In the information processing apparatus 200 shown in FIG. 2, a CPU 201 reads out control programs for respective blocks of the information processing apparatus 200 from a ROM 202, and loads the programs in a RAM 203 and executes them. In this way, the CPU 201 controls the operation of each block of the information processing apparatus 200.

The ROM 202 is an electrically erasable and recordable non-volatile memory that stores operating programs for each component of the information processing apparatus 200, as well as parameters required for the operation of each component.

The RAM 203 is a rewritable volatile memory that is used for expanding programs to be executed by the CPU 201, etc., and for temporarily storing data generated during the operation of each component of the information processing apparatus 200.

A storage unit 204, together with the ROM 202, stores operating programs for each component of the information processing apparatus 200, as well as parameters required for the operation of each component. Furthermore, in a case where the information processing apparatus 200 is used as the image data storage server 105, it is configured with large-capacity storage and stores image data sent from the camera management terminal 102.

An input unit 205 includes operating members and a connection unit to external operating members, and accepts operations by a user.

An output unit 206 includes a display unit and a connection unit for connecting to an external display device.

A communication unit 207 is for communicating with external apparatuses, including the camera management system 103.

The CPU 201, ROM 202, RAM 203, storage unit 204, input unit 205, output unit 206, and communication unit 207 are connected to one another via a bus 208 and are configured to be operable using application programs.

The CPU 201 reads the operating system and application programs from the storage unit 204 or the ROM 202, loads them into the RAM 203, and executes them to carry out various processes and realize the functions of this embodiment described below. The application programs cause the information processing apparatus 200 to receive user input from the input unit 205. They also cause the information processing apparatus 200 to output information to the output unit 206 and display the processing results. Further, they also cause the information processing apparatus 200 to communicate with other PCs, servers, devices, etc. connected to the network via the communication unit 207.

### - News-Gathering Activity Plan (Story)

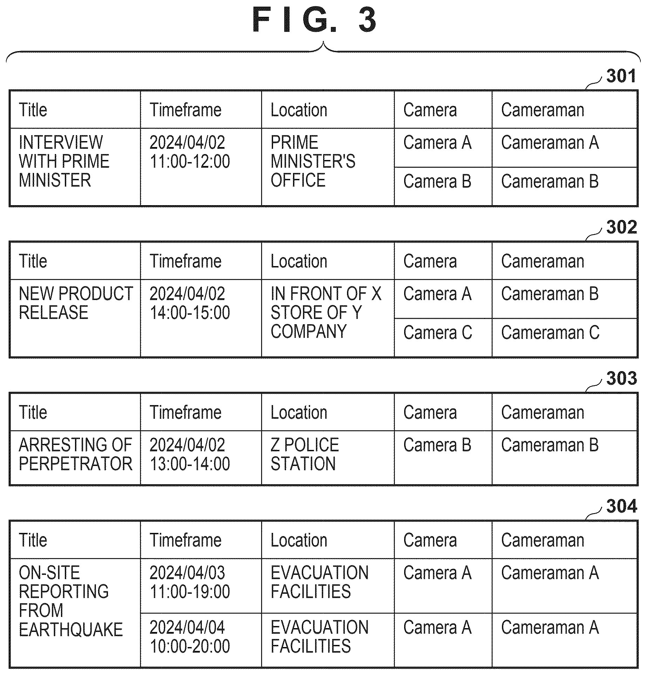

FIG. 3 shows examples of stories created by a planner. Here, a story refers to information about a news-gathering activity plan (image capturing plan information) for news-gathering activities for one purpose, including information on the date and time of the news-gathering activities (image capturing date and time), the location of the news-gathering activities (image capturing location), and the equipment to be used, including the camera. In FIG. 3, the camera 101a is represented as Camera A, the camera 101b as Camera B, and the camera 101c as Camera C, and a reporter who uses Camera A is represented as Cameraman A, a reporter who uses Camera B as Cameraman B, and a reporter who uses Camera C as Cameraman C.

In the example shown in FIG. 3, the camera 101a and camera 101b are assigned to a story 301, the camera 101a and camera 101c are assigned to a story 302, and only the camera 101b is assigned to a story 303. Furthermore, the camera 101a is assigned to a plurality of periods of time in a story 304. In this way, in actual image capturing work, there are cases where a plurality of cameras are used for one story.

### - Overall Sequence of News-Gathering Activity Support System

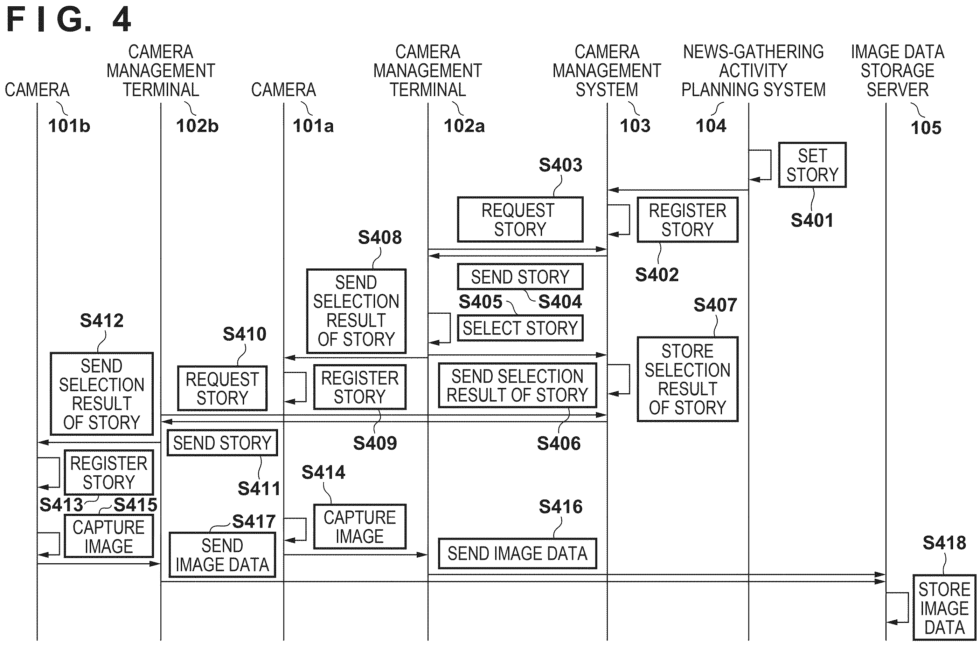

FIG. 4 is a sequence diagram outlining the processing performed by the news-gathering activity support system 100 of this embodiment. Here, the explanation is given of in a case where the story 301 shown in FIG. 3 is executed.

First, in step S401, the planner sets up each of the stories 301 to 304 on the news-gathering activity planning system 104. The stories 301 to 304 are set at different times. To set up the stories 301 to 304, the planner may directly operate the news-gathering activity planning system 104, or may access the news-gathering activity planning system 104 from the client terminal 106 via the LAN 109 and operate the news-gathering activity planning system 104.

Next, in step S402, the news-gathering activity planning system 104 transmits the stories 301 to 304 to the camera management system 103 at the respective set times, and the camera management system 103 registers (stores) the transmitted stories 301 to 304.

In step S403, Cameraman A, who has gone to the image capturing location, operates the news gathering support application running on the camera management terminal 102a to request a story from the camera management system 103. At this time, since the camera management terminal 102 that requested the story is the camera management terminal 102a, the camera management system 103 selects stories 301, 302, and 304 that include the camera 101a linked to the camera management terminal 102a from the stories registered in step S402, and sends them to the camera management terminal 102a in step S404.

In step S405, a list of the stories 301, 302, and 304 sent from the camera management system 103 in step S403 is displayed on the user interface (UI) of the news gathering support application running on the camera management terminal 102a. Then, on the camera management terminal 102a, the user selects a story to be carried out next from the displayed list of the stories 301, 302, and 304.

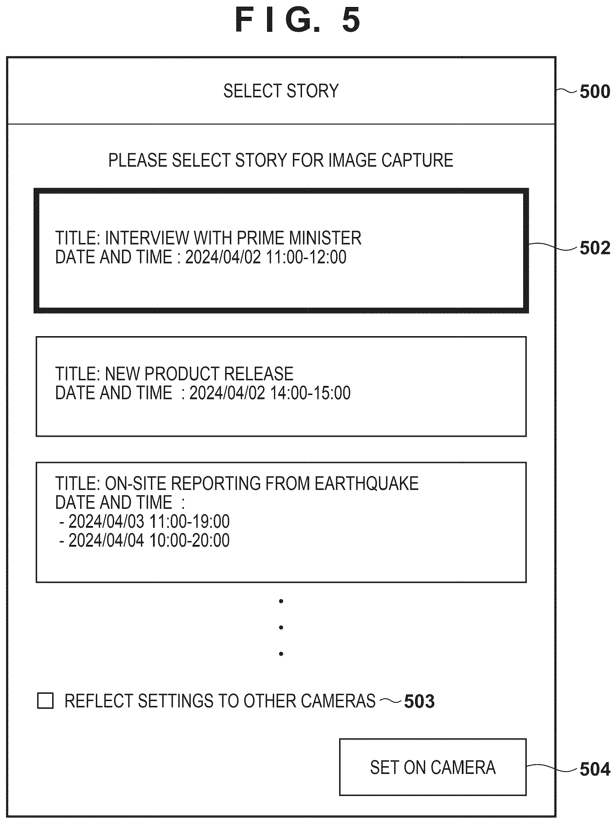

FIG. 5 shows an example of a UI screen for selecting a story on the camera management terminal 102a. A story selection screen 500 displays a list of stories corresponding to the stories 301, 302, and 304 sent from the camera management system 103 in step S404. When a story 502 to be carried out is selected from the list of stories, a screen is changed to a screen that shows the selected state. Note that the display method at this time is not limited to that shown in FIG. 5, and any method that shows the selected state may be used.

In this state, pressing a "Set on camera" button 504 sends the selected story 502 from the camera management terminal 102a to the camera 101a. At this time, if a "Reflect settings to other cameras" checkbox 503 is checked, pressing the button 504 sends information to the camera management system 103 that the story 502 (story 301 in FIG. 3) is selected.

In step S405, as described above, if the "Reflect settings to other cameras" checkbox 503 is ON and the "Set on camera" button 504 is pressed, in step S406 the camera management terminal 102a sends information about the story 301 selected in step S405 to the camera management system 103. Then, in step S407, the camera management system 103 stores information indicating that the story that the camera 101a connected to the camera management terminal 102a will subsequently execute is the story 301.

In step S408, the camera management terminal 102a transmits information about the story 301 selected in step S404 to the camera 101a, and in step S409, the camera 101a registers the information about the story 301. Thereafter, in step S414, the camera 101a assigns the identifier of the given story 301 as metadata to the captured image.

Thereafter, in step S410, Cameraman B, who has gone to the image capturing location like Cameraman A, operates the news gathering support application running on the camera management terminal 102b to request a story from the camera management system 103. At this time, because the camera management terminal 102 that requested the story is the camera management terminal 102b, the camera management system 103 selects the stories 301, 302, and 303 that include the camera 101b linked to the camera management terminal 102b, and sends them to the camera management terminal 102b in step S411. At this time, information indicating that the story 301 is selected by the camera management terminal 102a (camera 101a) is also sent to the camera management terminal 102b.

In step S412, the camera management terminal 102b determines from the information and identifier of the story 301 attached as metadata among the stories 301, 302, and 303 transmitted in step S411 that the story 301 is selected by another camera 101. In this case, because the story 301 has been selected by the camera 101a, the camera management terminal 102b transmits the information of the story 301 to the camera 101b, and in step S413, the camera 101b registers the information of the story 301.

In steps S414 and S415, the camera 101a and the camera 101b each capture images in accordance with the story 301, add the identifier of the story 301 to the captured images as metadata, and send the images to the camera management terminal 102a and the camera management terminal 102b, respectively. In steps S416 and S417, the camera management terminal 102a and the camera management terminal 102b send the images with the identifier of the story 301 to the image data storage server 105, and the image data storage server 105 stores the sent images in step S418. By linking with the news-gathering activity planning system 104, the stored image data can be referenced, edited, and the like while linked to the story.

In this way, for example, in a case where image capturing operation based on the story 301 is performed, since the camera 101a and the camera 101b are assigned, and so if image capturing is performed as planned, after the story 301 is selected by the camera management terminal 102a, the story 301 must also be set on the camera management terminal 102b, which is linked to camera 101b that will perform image capturing operation based on the story 301. Therefore, in steps S410 and S411, when the camera management terminal 102b acquires stories that are candidates for image capture by the camera 101b from the camera management system 103, it also acquires information indicating that the story 301 has been selected by another camera. As a result, in a case where images are to be captured based on the same story with a plurality of cameras, the story selected by the other camera is automatically selected.

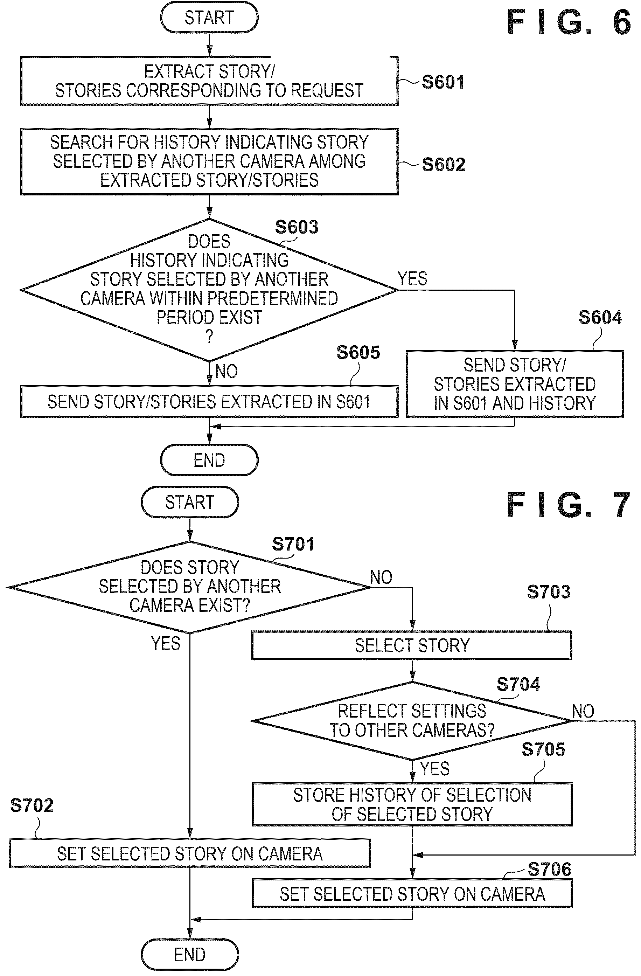

FIG. 6 is a flowchart illustrating the processing performed by the camera management system 103 in response to the story request in steps S403 and S410 in FIG. 4, and is executed in a case where a story is requested from the camera management terminal 102.

In step S601 , a story or stories that include the camera 101 linked to the camera management terminal 102 that requested the story are extracted from the stories registered in the camera management system 103. Furthermore, the extraction of a story or stories may be performed based on a time condition, such as the story starting within a certain period from the current time, a geographical condition, such as the location of the story being within a certain range from the location information of the camera 101, or other conditions, in addition to the camera 101 to be used.

In step S602, a search is performed to determine whether any of the story or stories extracted in step S601 have already been selected by another camera 101. In the example described above with reference to FIG. 4, when a story is requested from the camera management terminal 102b in step S410, the history of the camera management terminal 102a linked to the camera 101a selecting the story 301 is saved, and this history is detected.

In step S603, it is determined whether a history exists as a result of the search in step S602, and if a history exists, whether the history is recent. For example, if the history is older than a predetermined period, such as one month, it is assumed that the image capture itself has ended, and there is no point in automatically setting the story with that history in the camera 101. In this way, by determining the history based on time conditions, it is possible to prevent the extraction of unnecessary history. If the answer is YES in step S603, the process proceeds to step S604, and if NO, the process proceeds to step S605.

In step S604, the story extracted in step S601 and, if a history was detected in step S602, the detected history are sent to the camera management terminal 102 that made the request. In the example shown in FIG. 4, if there is a history indicating that camera 101a selected the story 301 one hour ago, the stories 301, 302, and 303, as well as a history indicating that the story 301 was selected by the camera 101a, are sent to the camera management terminal 102b. This makes it possible to automatically register the story 301, which is the selection result of the camera 101a, in the camera 101b in step S411, as described above.

On the other hand, in step S605, since there is no story that has a history of being selected within a certain period of time among the story or stories extracted in step S601, the story or stories extracted in step S601 are sent to the camera management terminal 102 that made the request.

When the process of step S604 or S605 is completed, the story extraction processing ends.

FIG. 7 is a flowchart showing the processing performed in steps S405 to S409 and steps S412 to S413 in FIG. 4. This processing is executed when the camera management terminal 102 receives a story or stories from the camera management system 103 in response to a story request.

In step S701, it is confirmed whether the story or stories transmitted from the camera management system 103 include a story set in another camera management terminal 102. If a story set in another camera management terminal 102 exists, the process proceeds to step S702, and if a story set in another camera management terminal 102 does not exist, the process proceeds to step S703.

In step S702, since a story set in another camera management terminal 102 exists, the identifier of the story is transmitted to the camera 101. The camera 101 assigns the transmitted identifier of the story as metadata to images captured thereafter.

On the other hand, in step S703, since no story set in other camera management terminals 102 is included, the story or stories acquired from the camera management system 103 are displayed on the UI of the camera management terminal 102. At this time, a UI including the story selection screen 500 as shown in FIG. 5 described above is displayed. The cameraman selects a story to be performed from the story or stories displayed on the story selection screen 500 of the UI.

In step S704, it is determined whether the check box 503 is ON on the story selection screen 500 of the UI of the camera management terminal 102, that is, whether the settings should be reflected to other cameras. If it is ON, the process proceeds to step S705; if it is not ON, the process proceeds to step S706.

In step S705, when the cameraman presses the "Set on camera" button 504, the identifier of the selected story is sent to the camera management system 103. The camera management system 103 saves the sent identifier of the story and the identifier of the camera 101 linked to the camera management terminal 102 as a selection history of the story.

In step S706, the identifier of the story selected on the UI of the camera management terminal 102 is transmitted to the camera 101. The camera 101 assigns the transmitted identifier of the story to images captured thereafter as metadata.

Through the above processing, when a story with a history recently selected by another camera 101 is acquired from the camera management system 103, the camera management terminal 102 automatically sets the information of that story in the camera 101. Furthermore, if a story with a history recently selected by another camera 101 is not acquired from the camera management system 103, a list of stories that use the camera 101 is displayed so that the cameraman can select one.

As described above, according to the first embodiment, the cameraman can arbitrarily select the story according to which image capturing operation is performed on-site, and the settings can be automatically propagated to other cameras that perform image capturing operation for the same story, thereby reducing operational effort.

### <Second Embodiment>

Next, a second embodiment of the present disclosure will be described.

In the first embodiment described above, a case where a story selected on the camera management terminal 102 is automatically set on another cameras is explained. In contrast, in the second embodiment, a case will be explained where a story is displayed as "recommended" to another cameras instead of automatic setting the story on the other cameras.

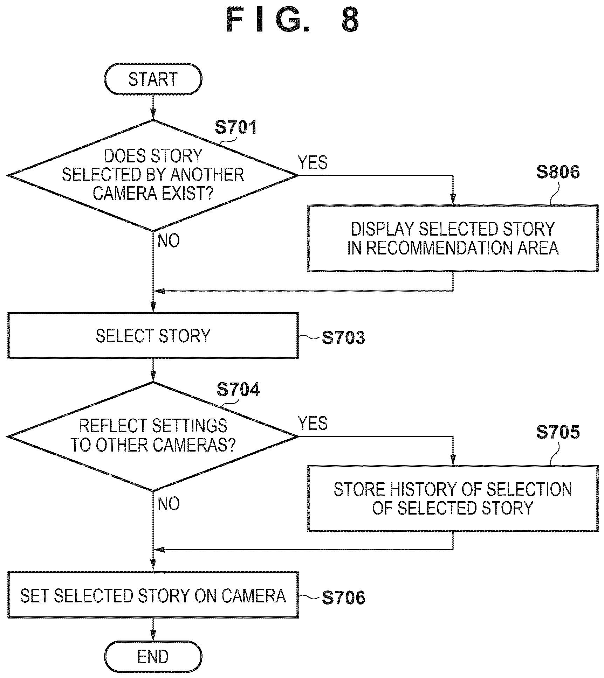

FIG. 8 is a flowchart illustrating the processing performed in steps S405 to S409 and steps S412 to S413 in FIG. 4 in the second embodiment. Similar to the processing in FIG. 7, this processing is executed when the camera management terminal 102 receives a story or stories from the camera management system 103 in response to a story request. Note that in FIG. 8, the same processes as those in FIG. 7 are assigned the same step numbers, and their explanations will be omitted.

In the first embodiment, if a story that was set in another camera is sent from the camera management system 103, the camera management terminal 102 sets that story in the camera 101. In contrast, in the second embodiment, in step S806, the story that was set in another camera is displayed in a "recommended" area in a format that is likely to catch the photographer's eye.

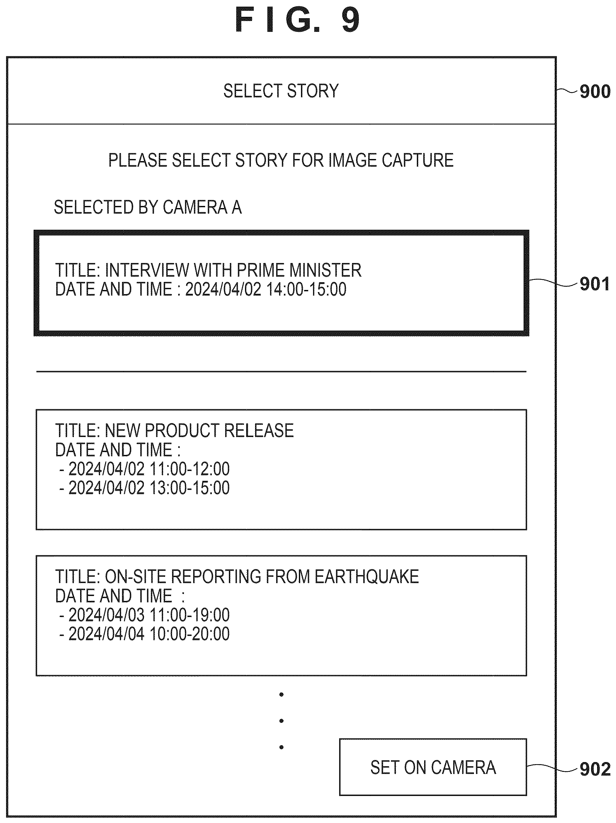

FIG. 9 shows an example of a UI screen for selecting a story on the camera management terminal 102. A list of stories sent from the camera management system 103 is displayed on a story selection screen 900. In this list of stories, a story 901 set on another camera is displayed in a separate frame (display area). The story 901 is displayed in a selected state by default, and information about the selected story can be transferred to the camera 101 simply by pressing a "Set on camera" button 902. On the other hand, if a different story needs to be implemented due to on-site circumstances, another story can be selected and information about the selected story can be transferred to the camera 101.

The display method for the story or stories set in other cameras is not limited to this, and any format that is likely to catch the photographer's eye may be used. For example, a different color, shape, frame, etc. may be used to make the story more noticeable than other stories.

As described above, according to the second embodiment, it is possible to obtain the same effects as in the first embodiment. Furthermore, for example, if a plan to capture images with two cameras is changed to with one camera, even if the settings are mistakenly transferred to other cameras, it is possible for a photographer who received the selection information to flexibly handle the situation.

### <Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, altematives and equivalents falling within the scope of the appended claims.

## Claims

1. An information processing apparatus (102a) linked to a first image capturing apparatus (101a) comprising:
receiving means (207) configured to receive image capturing plan information including at least one image capturing plan that uses the first image capturing apparatus from a management apparatus (103) that manages information on a plurality of image capturing apparatuses;
determination means (201) configured to determine whether the image capturing plan information includes a history indicating that another information processing apparatus (102b, 102c) associated with another image capturing apparatus (101b, 101c) selects one of the image capturing plan or plans included in the image capturing plan information; and
output means (206) configured to, in a case where the history is included, select and output an image capturing plan indicated by the history.

2. The information processing apparatus according to claim 1, wherein, in a case where the history is included, the output means transmits the image capturing plan indicated by the history to the first image capturing apparatus.

3. The information processing apparatus according to claim 1 or 2, wherein, in a case where the history is not included,
the output means outputs the image capturing plan or plans included in the image capturing plan information to display means for display, and
the output means transmits an image capturing plan selected by operation means from the image capturing plan or plans displayed on the display means to the first image capturing apparatus.

4. The information processing apparatus according to claim 1, wherein, in a case where the history is included, the output means outputs the image capturing plan indicated by the history to display means for display, and controls to display the image capturing plan indicated by the history in a format that is more eye-catching than other image capturing plan or plans included in the image capturing plan information.

5. The information processing apparatus according to claim 4, wherein the output means controls to display the image capturing plan indicated by the history and the other image capturing plan or plans in separate display areas.

6. The information processing apparatus according to any one of claims 4 or 5, wherein, in a case where the history is not included, the output means controls to display the image capturing plan or plans included in the image capturing plan information on the display means.

7. The information processing apparatus according to any one of claims 4 to 6 further comprising transmission means configured to transmit an image capturing plan selected by operation means from the image capturing plan or plans displayed on the display means to the first image capturing apparatus.

8. The information processing apparatus according to claim 3 or 7, wherein, in a case where the history is not included,
the determination means further determines whether or not to transmit information on the image capturing plan selected by the operation means to the management apparatus, and
in a case where it is determined that the information on the image capturing plan selected by the operation means is to be transmitted to the management apparatus, the output means transmits the information on the image capturing plan selected by the operation means to the management apparatus.

9. A system (100)comprising:
the information processing apparatus (102) according to any one of claim 1 to 9; and
the management apparatus (103).

10. The system according to claim 9, wherein the management apparatus comprises:
storage means configured to store an image capturing plan or plans that uses at least one of a plurality of image capturing apparatuses and a history indicating that one of a plurality of information processing apparatuses linked to the plurality of image capturing apparatuses selects an image capturing plan;
extraction means configured to extract an image capturing plan that uses the first image capturing apparatus from the image capturing plan or plans stored in the storage means in a case where a request for an image capturing plan is received from an information processing apparatus linked to the first image capturing apparatus;
search means configured to search a history indicating the extracted image capturing plan; and
transmission means configured to transmit image capturing plan information including the extracted image capturing plan and the history to the first image capturing apparatus in a case where the history is obtained by the search means and the history satisfies a predetermined condition.

11. The system according to claim 10, wherein the extraction means extracts an image capturing plan further based on at least one of a current time and a position of the first image capturing apparatus.

12. The system according to claim 10 or 11, wherein the predetermined condition is that the time when the history was stored is within a predetermined period of time from the current time.

13. A control method of an information processing apparatus linked to a first image capturing apparatus comprising:
a receiving step (S404) of receiving image capturing plan information including at least one image capturing plan that uses the first image capturing apparatus from a management apparatus that manages information on a plurality of image capturing apparatuses;
a determination step (S603) of determining whether the image capturing plan information includes a history indicating that another information processing apparatus associated with another image capturing apparatus selects one of the image capturing plan or plans included in the image capturing plan information; and
an output step (S604) of, in a case where the history is included, selecting and outputting an image capturing plan indicated by the history.

14. A program comprising instructions which, when the program is executed by a computer, cause the computer to carry out the method of claim 13.

15. A computer-readable storage medium storing a program for causing a computer to execute the control method according to claim 13.
